# FASCICULE DE BREVET EUROPEEN

(11) **EP 2 164 728 B1**
(45) Date de publication et mention de la délivrance du brevet: **07.03.2012**
(21) Numéro de dépôt: 08826335.5
(22) Date de dépôt: 08.07.2008
(51) Int. Cl.: B60S 1/50, B60S 1/48

(54) **PROCEDE DE FABRICATION D'UN RESERVOIR POUR LE LIQUIDE DE LAVAGE DES SURFACES VITREES D'UN VEHICULE AUTOMOBILE ET RESERVOIR OBTENU PAR CE PROCEDE**
VERFAHREN ZUR HERSTELLUNG EINES BEHÄLTERS FÜR FLÜSSIGKEITEN ZUM WASCHEN DER GLASFLÄCHEN EINES MOTORFAHRZEUGS UND NACH DIESEM VERFAHREN HERGESTELLTER BEHÄLTER
METHOD FOR PRODUCING A CONTAINER FOR LIQUID USED TO WASH THE GLASS SURFACES OF A MOTOR VEHICLE AND RESULTING CONTAINER

(30) Priorité: 11.07.2007 FR 0756408
(43) Date de publication de la demande: 24.03.2010
(73) Titulaire: Peugeot Citroën Automobiles SA, 78140 Vélizy-Villacoublay (FR)
(72) Inventeur: JEUFFE, Gérard, F-78580 Bazemont (FR); MAGNIER, Nicolas, F-92140 Clamart (FR); MEROUR, Sylvain, F-44120 Vertou (FR); GAUDIAU, Ghislain, F-44150 Ancenis (FR)
(86) Numéro de dépôt international: PCT/FR2008/051272
(87) Numéro de publication internationale: WO 2009/010689

(56) Documents cités:
- DE-A1- 2 701 026
- DE-A1- 10 119 704
- DE-A1- 19 909 041
- FR-A- 2 875 763

## Description

La présente invention est relative à un procédé pour la fabrication d'un réservoir d'eau destinée au lavage des surfaces vitrées d'un véhicule automobile, notamment de la glace de son pare brise avant ou de sa lunette arrière, ou encore d'autres surfaces telles que les glaces des projecteurs de lumière ou éventuellement des rétroviseurs extérieurs.

L'invention concerne également le réservoir réalisé conformément à ce procédé.

L'invention se rapporte notamment à un dispositif de réchauffage de cette eau de lavage, mettant en oeuvre les dispositions ayant fait l'objet du brevet français FR 2 875 763 au nom de la Demanderesse, selon lequel ce dispositif comporte, montés dans le compartiment moteur du véhicule, d'une part une boîte de dégazage sous pression, faisant partie du circuit de refroidissement de ce moteur, et d'autre part au moins un réservoir d'eau de lavage, ce réservoir étant associé à une pompe de circulation prélevant l'eau dans celui-ci et la délivrant à des gicleurs de distribution et de répartition sur les surfaces vitrées à nettoyer, et se caractérise en ce que le réservoir entoure au moins partiellement la boîte de dégazage en ménageant entre eux un espace de séparation d'épaisseur déterminée, et en ce que, dans cet espace, est intégré un corps creux à double cloison, délimitant un volume isolant thermique, fermé sur lui-même.

La présence de ce corps creux faisant fonction d'isolant thermique, disposé entre la boîte de dégazage et le réservoir de liquide de lavage, limite très sensiblement la vitesse avec laquelle s'effectue le transfert des calories de cette boîte vers le réservoir de sorte que le circuit de refroidissement dans lequel est montée cette boîte ne subit aucun choc thermique brutal, ce transfert des calories de la boîte vers le réservoir étant progressif et continu.

De préférence et selon une autre caractéristique du dispositif conforme à ce brevet antérieur, le corps creux isolant thermique, fermé sur lui-même, logé dans l'espace intermédiaire, constitue une enceinte placée sous vide.

On sait que le refroidissement du moteur et de divers accessoires directement liés à celui-ci s'effectue, dans un véhicule automobile, au moyen d'un circuit de refroidissement rempli d'un liquide approprié, usuellement de l'eau additionnée d'un produit propre à limiter dans une certaine mesure sa vaporisation, ce circuit traversant notamment la culasse du moteur par des tubulures où l'eau est admise sous pression depuis une pompe de circulation, des piquages et canalisations de liaison mettant ce circuit en communication avec un radiateur devant lequel tourne un ventilateur dont la mise en route est commandée dès que la température dans le circuit atteint un seuil prédéterminé.

Sur ce circuit de refroidissement, présent sur tout véhicule automobile, il est nécessaire de prévoir un volume libre en communication avec lui, confiné dans un ensemble clos, qu'il est convenu d'appeler « boîte de dégazage » et dont le rôle est d'assurer la séparation du liquide et de sa vapeur, le cas échéant de la fraction des gaz de combustion et de l'air extérieur qui se sont introduits dans le circuit lors du fonctionnement du moteur ou à l'occasion du remplissage de ce circuit avec le liquide qu'il contient.

Cette boîte de dégazage assure une fonction essentielle pour la régulation et la mise en sécurité du circuit de refroidissement, en particulier en abaissant le niveau de gaz contenu dans ce circuit à une valeur limite fixée par le tarage correspondant d'une soupape d'échappement, la présence d'une quantité de gaz trop importante pouvant avoir des conséquences graves sur le fonctionnement satisfaisant du circuit, comme par exemple conduire à désamorcer la pompe de circulation, à endommager la culasse du moteur en cas de refroidissement insuffisant, plus encore, si la circulation du liquide n'atteint pas un débit approprié, à créer des phénomènes de cavitation qui peuvent dégrader certaines pièces essentielles, ou enfin à accroître les rejets d'eau vers l'extérieur par un orifice de trop plein prévu sur le circuit, ces divers effets étant la conséquence d'une présence de gaz excessive.

Le rôle déterminant de la boîte de dégazage exige cependant, pour que celle-ci atteigne l'efficacité requise, non seulement qu'elle soit localisée avec précision au-dessus du niveau de la culasse et du radiateur, mais encore que la montée en température du liquide dans le circuit de refroidissement soit relativement rapide, de l'ordre de 15 minutes pour atteindre 60° à 80° dans un moteur diesel, également les mêmes valeurs mais en 5 minutes seulement pour un moteur à essence, avec un volume de liquide généralement compris entre 1,5 et 3 litres, et que cette température soit en permanence maintenue au voisinage immédiate de ces niveaux, sans à coups notables.

Or, comme exposé dans ce brevet antérieur, il s'avère que si, en fonctionnement, se produit une perte sensible et brutale de calories au niveau de la boîte de dégazage, conduisant à une baisse de pression dans le circuit et à un accroissement corrélatif de la vaporisation du liquide, les inconvénients précités qui apparaissent immédiatement, risquent de provoquer un refroidissement insuffisant de la culasse et des autres parties du véhicule intéressées par le circuit, avec le risque maximal de provoquer la rupture du moteur et l'immobilisation immédiate du véhicule, entraînant des coûts de réparation excessifs.

Cependant, du fait même de ce transfert contrôlé et progressif des calories de la boîte de dégazage vers le réservoir d'eau de lavage, réalisé conformément aux dispositions caractéristiques de la solution proposée par le brevet français FR 2 875 763 précité, l'élévation de température dans ce réservoir est parfois insuffisante pour assurer un nettoyage efficace de la surface vitrée sur laquelle cette eau est projetée sous pression par des gicleurs associés à des balais qui portent contre cette surface et qui sont animés d'un mouvement d'oscillation ou de translation approprié.

Un perfectionnement vise donc à accroître l'élévation de la température de l'eau de lavage fournie aux gicleurs en provenance du réservoir de liquide disposé de manière à entourer au moins partiellement la boîte de dégazage qui fournit à ce réservoir les calories nécessaires, sans que cet accroissement ait une incidence négative sur le fonctionnement de cette boîte dans le circuit de refroidissement du moteur.

Notamment on peut avantageusement prévoir de fractionner le volume intérieur du réservoir de telle sorte qu'il comporte une chambre principale, dont le volume correspond à la majeure partie de ce réservoir et une chambre auxiliaire, de beaucoup plus faible volume comparé à celui de la chambre principale avec laquelle elle est en communication permanente, cette chambre auxiliaire étant logée entre la boîte de dégazage et le corps creux du côté opposé de celui-ci par rapport à la chambre principale, cette chambre auxiliaire étant en contact direct avec la paroi externe de la boîte de dégazage.

Grâce à ces dispositions, la faible quantité d'eau de lavage introduite dans la chambre auxiliaire à partir de la chambre principale du réservoir, est très rapidement amenée, du fait de son volume réduit, à une température proche de celle de la boîte de dégazage elle-même par suite du contact direct de cette chambre auxiliaire avec cette dernière, sans perturber le bon fonctionnement du circuit de refroidissement du moteur et en particulier sans occasionner un refroidissement brutal du liquide présent dans celui-ci.

Ainsi, le faible volume d'eau dans la chambre auxiliaire est rapidement porté à une température voisine de celle de la boîte de dégazage, soit à une valeur largement supérieure à celle de l'eau dans la chambre principale du réservoir, de sorte qu'une fois prélevée pour être distribuée aux gicleurs, elle permette un nettoyage plus efficace des surfaces vitrées, cette eau étant en outre renouvelée en permanence dans la chambre auxiliaire grâce à la communication permanente établie entre celle-ci et la chambre principale.

En règle générale, cette disposition s'applique dans les meilleures conditions lorsque le volume d'eau de lavage dans le réservoir est compris entre 1 et 8 litres, de préférence entre 3 et 6 litres selon le type de véhicule, le volume de la chambre auxiliaire étant de l'ordre de 20 à 200 cc.

Avantageusement, la communication entre la chambre principale et la chambre auxiliaire du réservoir s'effectue par un orifice de passage prévu en partie basse de ce réservoir à travers la double cloison du corps creux délimitant le volume isolant thermique. De plus, la chambre auxiliaire comporte un canal sensiblement vertical pour l'évacuation de l'air introduit lors du remplissage de celle-ci vers la chambre principale du réservoir.

La réalisation d'un tel dispositif de réchauffage met en oeuvre des solutions mécaniques complexes, notamment pour associer le réservoir d'eau de lavage avec ses deux chambres distinctes mais qui communiquent mutuellement d'une part, la boîte de dégazage du circuit de refroidissement et également la chambre auxiliaire au plus près l'une de l'autre d'autre part, avec néanmoins une séparation entre elles l'autre par le corps creux à double cloison délimitant le volume les isolant thermiquement dans les conditions précédemment exposées, l'ensemble devant en outre être le plus compact possible en raison de la place toujours limitée disponible dans le compartiment du moteur pour son montage et son raccordement aux diverses canalisations ou conduits de circulation de l'eau de lavage et du liquide de refroidissement respectivement.

La présente invention se rapporte à un tel ensemble et concerne un procédé pour sa fabrication dans des conditions simples et rapides qui assurent à la fois l'assemblage rapide et sûr des diverses parties de cet ensemble et l'étanchéité indispensable à réaliser entre elles.

A cet effet, le procédé considéré concerne la fabrication d'un réservoir d'eau de lavage associé à un dispositif de réchauffage comprenant une boîte de dégazage sous pression faisant partie du circuit de refroidissement du moteur, le réservoir comportant une chambre principale associée à une chambre auxiliaire de faible volume comparé à celui de la chambre principale avec laquelle elle est en communication permanente, cette chambre auxiliaire étant en contact direct avec la paroi de la boîte de dégazage, se caractérise en ce que le réservoir et la boîte de dégazage sont délimités ensemble à l'aide de trois pièces de forme, aptes à s'assembler mutuellement en superposition verticale, constituant respectivement une pièce supérieure, une pièce intermédiaire et une pièce inférieure, ces trois pièces étant agencées pour être reliées entre elles selon leurs périphéries en contact par des moyens de liaison continus, réalisant l'étanchéité de leurs assemblages respectifs.

Avantageusement, les trois pièces de forme sont réalisées par usinage ou de préférence par moulage par injection d'un matériau plastique, notamment transparent pour un contrôle visuel des niveaux dans le réservoir et dans la boîte de dégazage.

De plus et conformément à une autre caractéristique du procédé, les trois pièces de forme sont assemblées mutuellement par des soudures continues, effectuées selon leurs périphéries.

Dans un mode d'exécution préféré, on conforme la chambre principale du réservoir par l'assemblage des trois pièces qui délimitent chacune une partie de son volume.

Dans ce même mode de réalisation, on conforme la pièce intermédiaire et la pièce inférieure de manière à ce qu'elles délimitent ensemble la double cloison du corps creux et le volume de la chambre auxiliaire.

Egalement, on conforme les pièces supérieure et intermédiaire de manière à ce qu'elles délimitent ensemble la boîte de dégazage.

De préférence, la boîte de dégazage est réalisée de façon à présenter un profil extérieur sphérique.

D'autres avantages et caractéristiques du procédé de fabrication d'un réservoir d'eau de lavage des surfaces vitrées d'un véhicule automobile et du dispositif de réchauffage associé, conforme à l'invention, apparaîtront encore à travers la description qui suit d'un exemple de réalisation du produit obtenu par la mise en oeuvre de ce procédé, donné à titre indicatif et non limitatif, en référence aux dessins annexés sur desquels :
- La Figure 1 est une vue extérieure en élévation verticale du réservoir d'eau de lavage et de son dispositif de réchauffage.
- Les Figures 2, 3 et 4 sont des vues en perspective partielle des diverses pièces dont l'assemblage réalise l'ensemble illustré sur la Figure 1.

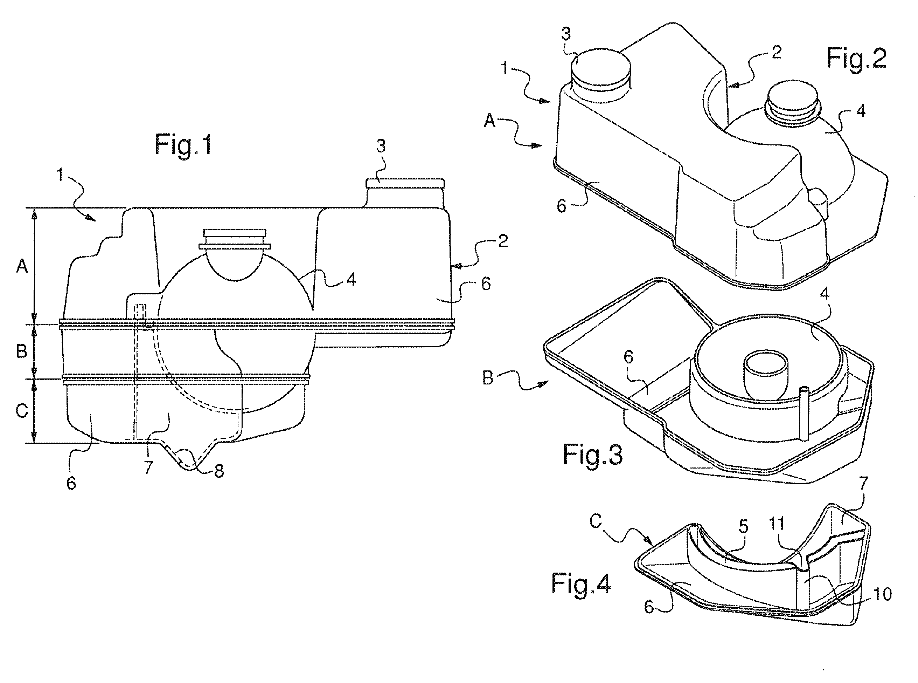

Sur la Figure 1, la référence 1 désigne dans son ensemble le réservoir 2 d'eau de lavage et le dispositif de réchauffage associé, pour le nettoyage des surfaces vitrées (non représentées) d'un véhicule automobile, la quantité d'eau introduite dans ce réservoir par un bouchon de remplissage 3 prévu à la partie supérieure de celui-ci, représentant un volume de l'ordre de 1 à 8 litres, selon les types de véhicule.

Comme déjà décrit de façon détaillée dans le brevet français FR 2 875 763 au nom de la Demanderesse, le réservoir 2 est aménagé de manière à entourer au moins partiellement une boîte de dégazage 4, usuellement à profil sphérique, montée dans le circuit de refroidissement du moteur de ce véhicule, le liquide en circulation étant généralement additionné d'un produit propre à limiter sa tension superficielle.

Le volume de liquide dans le circuit de refroidissement varie également selon le type de véhicule, mais est généralement compris entre 1,5 et 3 litres.

Cette boîte de dégazage 4 assure notamment la séparation entre le liquide et sa vapeur, ou d'autres produits gazeux, voire l'air présent ou introduit dans ce circuit lors de son remplissage, la température à l'intérieur de cette boîte étant plus ou moins rapidement amenée, dès que le moteur fonctionne, à une valeur généralement comprise entre 60 et 80°, selon le type de véhicule.

Conformément à l'invention décrite dans ce brevet antérieur, la boîte de dégazage 4 est séparée du réservoir 2 qui l'entoure sur une fraction substantielle de sa surface par un corps creux à double paroi 5 (voir Figures 3 et 4), fermé sur lui-même, le cas échéant placé sous vide et qui assure un isolement thermique convenable entre la boîte et le réservoir, tout en permettant de contrôler le transfert des calories de l'une vers l'autre dans des conditions telles que le fonctionnement du circuit de refroidissement du moteur ne soit pas perturbé.

Le réservoir 2 comporte (voir également les Figures 3 et 4) une chambre principale 6 associée à une chambre auxiliaire 7, de volume très largement plus limité que celui de la chambre principale, de l'ordre de 20 à 200 cc seulement, cette chambre auxiliaire étant disposée du côté opposé de la double cloison de séparation 5, donc en contact direct avec la boîte de dégazage 4 dont une partie de la surface externe délimite ainsi cette chambre auxiliaire 7.

La chambre auxiliaire 7 communique directement avec la chambre principale 6 par un orifice de passage (non visible sur les Figures) de préférence ménagé à la partie inférieure de la double cloison de séparation 5.

Cette chambre auxiliaire 7 est par ailleurs réunie par un conduit 8 à au moins une pompe d'aspiration (non représentée), qui aspire le liquide contenu dans cette chambre et alimente les gicleurs. Un canal formant cheminée assure l'évacuation de l'air éventuellement présent ou introduit lors du remplissage de la chambre 7 par l'eau de lavage, ce canal (qui également n'est pas représenté pour ne pas surcharger les vues des Figures 3 et 4) s'étendant verticalement contre la double cloison 5 ou étant intégré à celle-ci.

Conformément au procédé de l'invention, on réalise l'ensemble constitué du réservoir et du dispositif de réchauffage décrit ci-dessus, au moyen de trois pièces de forme aptes à se superposer mutuellement dans le sens vertical sur la Figure 1, ces trois pièces pouvant être obtenues par usinage ou de préférence par moulage par injection d'un matériau plastique, de préférence transparent pour permettre notamment un contrôle visuel des liquides dans les chambres du réservoir et dans la boîte de dégazage du circuit de refroidissement.

Les trois pièces de forme sont repérées sur les Figures 2 à 4 sous les références A, B, C, les pièces A et B réalisant par leur assemblage la majeure partie de la chambre principale 6 du réservoir 2 et, selon deux coquilles hémi- sphériques accolées, la boîte de dégazage 4.

La pièce C forme, avec la paroi en regard de la coquille inférieure de la boîte de dégazage 4, la chambre auxiliaire 7, munie de la double paroi d'isolation 5.

Les pièces A et B ont un unique plan de joint commun transversal selon lequel elles sont réunies mutuellement et de manière étanche par soudure de leurs bords périphériques en contact ou par tout autre moyen de liaison étanche approprié. Ces pièces englobent la pièce C qu'elles entourent.

Bien entendu, il va de soi que l'invention ne se limite pas à l'exemple de réalisation plus spécialement décrit et représenté en référence aux dessins annexés ; elle en embrasse au contraire toutes les variantes selon la protection donnée par les revendications.

## Revendications

1. Procédé pour la fabrication d'un réservoir (2) d'eau de lavage, associé à un dispositif de réchauffage comprenant une boîte de dégazage (4) sous pression faisant partie du circuit de refroidissement du moteur d'un véhicule automobile, **caractérisé en ce que** le réservoir comporte une chambre principale (6) et une chambre auxiliaire (7) de faible volume comparé à celui de la chambre principale avec laquelle elle est en communication permanente, cette chambre auxiliaire (7) étant en contact avec la paroi de la boîte de dégazage (4), le réservoir (2) et la boîte de dégazage (4) étant délimités ensemble à l'aide de trois pièces de forme (A,B,C), aptes à s'assembler mutuellement en superposition verticale, constituant respectivement une pièce supérieure (A), une pièce intermédiaire (B) et une pièce inférieure (C), ces trois pièces étant agencées pour être reliées entre elles selon leurs bords périphériques en contact par des moyens de liaison continus, réalisant l'étanchéité de leurs assemblages respectifs.

2. Procédé selon la revendication 1, **caractérisé en ce que** la boîte et le réservoir sont séparés par un corps creux à double cloison (5) délimitant entre eux un volume isolant thermique fermé sur lui-même, ladite chambre auxiliaire (7) étant logée entre la boîte de dégazage (4) et le corps creux du côté opposé de celui-ci par rapport à la chambre principale (6).

3. Procédé selon l'une quelconque des revendications précédentes, **caractérisé en ce que** les trois pièces de forme (A,B,C) sont réalisées par usinage ou de préférence par moulage par injection d'un matériau plastique, notamment transparent pour un contrôle visuel des niveaux dans le réservoir et dans la boîte de dégazage.

4. Procédé selon l'une quelconque des revendications précédentes, **caractérisé en ce que** les trois pièces de forme (A,B,C) sont assemblées mutuellement par des soudures continues, effectuées selon leurs bords périphériques.

5. Procédé selon l'une quelconque des revendications précédentes, **caractérisé en ce qu'**on conforme la chambre principale (6) du réservoir par l'assemblage des trois pièces (A,B,C) qui délimitent chacune une partie de son volume.

6. Procédé selon l'une quelconque des revendications 1 à 4, **caractérisé en ce qu'**on conforme la pièce intermédiaire (B) et la pièce inférieure (C) de manière à ce qu'elles délimitent ensemble la double cloison (5) du corps creux et le volume de la chambre auxiliaire (7).

7. Procédé selon l'une quelconque des revendications 1 à 4, **caractérisé en ce qu'**on conforme les pièces supérieure (A) et intermédiaire (B) de manière à ce qu'elles délimitent ensemble la boîte de dégazage (4).

8. Procédé selon la revendication 7, **caractérisé en ce que** la boîte de dégazage (4) est réalisée de façon à présenter un profil extérieur sphérique.

9. Réservoir (2) d'eau de lavage, associé à un dispositif de réchauffage comprenant une boîte de dégazage (4), fabriqué au moyen du procédé selon l'une quelconque des revendications 1 à 8.

## Claims

1. Method for manufacturing a container (2) for wash water, associated with a heating device comprising a degassing box (4) under pressure which is part of the cooling circuit of the engine of a motor vehicle, **characterised in that** the container comprises a main chamber (6) and an auxiliary chamber (7) having a small volume by comparison with that of the main chamber with which it is in continuous communication, said auxiliary chamber (7) being in contact with the wall of the degassing box (4), the container (2) and the degassing box (4) together being defined by three shaped parts (A, B, C) which are adapted to be joined vertically above one another, respectively forming an upper part (A), a middle part (B) and a lower part (C), these three parts being arranged so as to be interconnected along the contacting peripheral edges thereof by continuous connection means which provide tightness of the respective joints thereof.

2. Method according to claim 1, **characterised in that** the box and the container are separated by a hollow body, which has a double wall (5) and defines, between said box and said container, a thermally insulating volume which is closed in on itself, said auxiliary chamber (7) being accommodated between the degassing box (4) and the hollow body on the opposite side of said hollow body from the main chamber (6).

3. Method according to any one of the preceding claims, **characterised in that** the three shaped parts (A, B, C) are formed by machining or preferably injection-moulding a plastics material, in particular one which is transparent for visual inspection of the filling levels in the container and in the degassing box.

4. Method according to any one of the preceding claims, **characterised in that** the three shaped pieces (A, B, C) are joined together by continuous weld seams made along the peripheral edges thereof.

5. Method according to any one of the preceding claims, **characterised in that** the main chamber (6) of the container is formed by joining the three parts (A, B, C), which each define part of the volume thereof.

6. Method according to any one of claims 1 to 4, **characterised in that** the middle part (B) and the lower part (C) are formed so as together to define the double wall (5) of the hollow body and the volume of the auxiliary chamber (7).

7. Method according to any one of claims 1 to 4, **characterised in that** the upper part (A) and middle part (B) are formed so as together to define the degassing box (4).

8. Method according to claim 7, **characterised in that** the degassing box (4) is produced so as to have a spherical outer contour.

9. Container (2) for wash water, associated with a reheating device comprising a degassing box (4), manufactured by the method according to any one of claims 1 to 8.

## Patentansprüche

1. Verfahren zur Herstellung eines Behälters (2) für Waschwasser, der einer Aufwärmvorrichtung mit einem Entgasungskasten (4) unter Druck zugeordnet ist, der zum Kühlkreislauf des Motors eines Kraftfahrzeugs gehört, **dadurch gekennzeichnet, dass** der Behälter eine Hauptkammer (6) und eine Hilfskammer (7) mit einem Volumen aufweist, das im Vergleich zu dem der Hauptkammer, mit der sie in ständiger Kommunikation steht, gering ist, wobei diese Hilfskammer (7) mit der Wand des Entgasungskastens (4) in Kontakt ist, wobei der Behälter (2) und der Entgasungskasten (4) zusammen mit Hilfe von drei Formteilen (A, B, C) begrenzt sind, die in vertikaler Überlagerung miteinander verbunden werden können, wobei sie jeweils ein oberes Teil (A), ein Zwischenteil (B) und ein unteres Teil (C) bilden, wobei diese drei Teile ausgebildet sind, um entlang ihrer in Kontakt befindlichen umlaufenden Ränder durch durchgängige Verbindungsmittel, welche die Abdichtung ihrer jeweiligen Verbindungsstellen bewirken, miteinander verbunden zu werden.

2. Verfahren nach Anspruch 1, **dadurch gekennzeichnet, dass** der Kasten und der Behälter durch einen doppelwandigen Hohlkörper (5) getrennt sind, der zwischen ihnen ein Wärme isolierendes Volumen, das auf sich selbst geschlossen ist, begrenzt, wobei die Hilfskammer (7) zwischen dem Entgasungskasten (4) und dem Hohlkörper auf dessen in Bezug zu der Hauptkammer (6) entgegengesetzter Seite angeordnet ist.

3. Verfahren nach einem der vorhergehenden Ansprüche, **dadurch gekennzeichnet, dass** die drei Formteile (A, B, C) durch spanende Bearbeitung oder vorzugsweise durch Spritzgießen eines Kunststoffs, insbesondere eines transparenten Kunststoffs für die Sichtkontrolle der Füllstände in dem Behälter und in dem Entgasungskasten hergestellt sind.

4. Verfahren nach einem der vorhergehenden Ansprüche, **dadurch gekennzeichnet, dass** die drei Formteile (A, B, C) durch durchgängige Schweißnähte miteinander verbunden sind, die entlang ihrer umlaufenden Ränder ausgeführt sind.

5. Verfahren nach einem der vorhergehenden Ansprüche, **dadurch gekennzeichnet, dass** die Hauptkammer (6) des Behälters durch Verbindung der drei Teile (A, B, C) ausgebildet wird, die jeweils einen Teil ihres Volumens begrenzen.

6. Verfahren nach einem der Ansprüche 1 bis 4, **dadurch gekennzeichnet, dass** das Zwischenteil (B) und das untere Teil (C) derart ausgebildet werden, dass sie zusammen die doppelte Wand (5) des Hohlkörpers und das Volumen der Hilfskammer (7) begrenzen.

7. Verfahren nach einem der Ansprüche 1 bis 4, **dadurch gekennzeichnet, dass** das obere Teil (A) und das Zwischenteil (B) derart ausgebildet werden, dass sie zusammen den Entgasungskasten (4) begrenzen.

8. Verfahren nach Anspruch 7, **dadurch gekennzeichnet, dass** der Entgasungskasten (4) derart realisiert ist, dass er ein kugelförmiges Außenprofil aufweist.

9. Waschwasserbehälter (2), der einer Aufwärmvorrichtung mit einem Entgasungskasten (4) zugeordnet ist, der mit Hilfe des Verfahrens nach einem der Ansprüche 1 bis 8 hergestellt ist.
